# EUROPÄISCHE PATENTSCHRIFT

(11) **EP 3 850 260 B1**
(45) Veröffentlichungstag und Bekanntmachung des Hinweises auf die Patenterteilung: **31.08.2022**
(21) Anmeldenummer: 19749688.8
(22) Anmeldetag: 31.07.2019
(51) Int. Cl.: F16L 37/091

(54) **ANSCHLUSSVORRICHTUNG FÜR ROHRLEITUNGEN MIT LECKAGEANZEIGE**
CONNECTION DEVICE FOR PIPES WITH LEAKAGE INDICATOR
DISPOSITIF DE RACCORDEMENT DE CANALISATIONS AVEC INDICATION DE FUITE

(30) Priorität: 14.09.2018 DE 102018122507
(43) Veröffentlichungstag der Anmeldung: 21.07.2021
(73) Patentinhaber: Voss Automotive GmbH, 51688 Wipperfürth (DE)
(72) Erfinder: KLEHR, Adrian, 58809 Neuenrade (DE); ENGELHARD, Frank, 42119 Wuppertal (DE); CANPOLAT, Kazim, 41540 Dormagen (DE); HAGEN, Harald, 51688 Wipperfürth (DE)
(74) Vertreter: Dr. Solf & Zapf Patent- und Rechtsanwalts PartG mbB
(86) Internationale Anmeldenummer: PCT/EP2019/070654
(87) Internationale Veröffentlichungsnummer: WO 2020/052858

(56) Entgegenhaltungen:
- EP-A1- 0 766 033
- EP-A2- 0 957 305
- DE-A1-102012 108 791

## Beschreibung

Die Erfindung betrifft eine Anschlussvorrichtung für Rohrleitungen mit einem Anschlusskörper mit einer Aufnahmeöffnung für eine mit einem Leitungsende in eine Einsteckrichtung einzusteckende Rohrleitung und ein innerhalb der Aufnahmeöffnung gelagertes Halteelement zum Fixieren des eingesteckten Leitungsendes gegen Herausziehen, wobei innerhalb des Anschlusskörpers ein hülsenförmiges Löseelement derart axial verschiebbar gelagert ist, dass durch Einwirken auf das Halteelement die Fixierung der eingesteckten Rohrleitung aufgehoben wird, wobei das Löseelement aus einem umfangsgemäß geschlossenen Ringteil besteht, an dem durch Längsschlitze voneinander getrennte Rastarme ausgebildet sind, wobei das Ringteil an seinem äußeren Umfang mittels einer Umfangsdichtung gegen eine innere Umfangswand des Anschlusskörpers und an seinem inneren Umfang im Bereich seiner Ringöffnung mittels einer Umfangsdichtung gegen die eingesteckte Rohrleitung abdichtbar ist.

Eine derartige Anschlussvorrichtung ist aus der EP 2 864 685 A1 bekannt. Bei dieser Anschlussvorrichtung ergibt sich das Problem, dass es zu einem fehlerhaften Einstecken der Rohrleitung kommen kann, wenn die Rohrleitung nicht vollständig eingesteckt ist und es somit zu einem Austritt des in der Rohrleitung fließenden Druckmediums kommt, wodurch das gesamte System ausfallen kann. Diese Gefahr ist bei der gattungsgemäßen Anschlussvorrichtung auch deshalb besonders groß, da die Rohrleitung unmittelbar eingesteckt wird, und nur über die Einsteckkraft letztlich festgestellt werden kann, ob die Rohrleitung bis zum Anschlag eingeführt ist. Eine weitere derartige Anschlussvorrichtung ist aus der DE 10 2012 108791 A1 bekannt.

Der Erfindung liegt die Aufgabe zu Grunde sicherzustellen, dass bestehende Fehlstellungen schon bei einer Inbetriebnahme, z. B. bei einer ersten Druckprüfung, schnell aufgefunden werden können.

Erfindungsgemäß wird dies durch die Merkmale des kennzeichnenden Teils des Anspruchs 1 dadurch erreicht, dass im montierten Zustand der Anschlussvorrichtung im inneren Umfangsbereich des Ringteils des Löseelementes die äußere Umfangsdichtung derart verformbar aus ihrer Dichtungslage ist, dass zwischen der äußeren Umfangsdichtung und der gegenüberliegenden inneren Umfangswand des Anschlusskörpers mindestens ein Leckagespalt durch einen im Innern der Anschlussvorrichtung vorhandenen Innendruck des in der Rohrleitung strömenden Druckmediums ausgebildet wird . Die Erfindung basiert demnach auf der Erkenntnis, dass es möglich ist, einen Leckagespalt im Falle eines im Innenraum entstehenden Überdrucks dadurch im Bereich der Dichtung zu erzeugen, dass der entstehende Druck ausreicht, um die Dichtung selbst aus ihrer Dichtstellung abzuheben. In dem Bereich, in dem die Dichtung abgehoben wird, entsteht dann ein Leckagespalt, aus dem das Druckmedium, insbesondere Druckluft, nach außen austreten kann und ein Zischgeräusch entsteht. Durch Wahrnehmung des Zischgeräusches kann der Anwender dann feststellen, dass die Anschlussvorrichtung nicht vollständig gesteckt ist. Sobald der erhöhte Druck im Innern der Anschlussvorrichtung nicht mehr besteht, nimmt die Dichtung ihre übliche Dichtfunktion nach außen wieder auf, so dass von außen nach innen insbesondere keine Verunreinigung in den Innenraum eintreten kann. Weiterhin ist das Löseelement ein stoffschlüssiges Zweikomponententeil aus dem Ringteil und den Umfangsdichtungen, wobei die Umfangsdichtungen aus einem elastischerem Werkstoff bestehen als das Ringteil. Dadurch wird eine schnelle Montage ebenso ermöglicht wie ein schneller und wirtschaftlich optimierter Herstellungsprozess. Weiterhin wird die Einbausicherheit durch eine Reduzierung möglicher Fehlmontagen erhöht.

Gemäß einer weiteren Ausführungsform der Erfindung weist das Ringteil des Löseelementes eine entgegen der Einsteckrichtung gerichtete äußere Betätigungsoberfläche auf und liegt im montierten Zustand mit einer äußeren Umfangsfläche umlaufend an der inneren Umfangsfläche des Anschlusskörpers an, wodurch das Löseelement in Einsteckrichtung gesehen hinter der äußeren Umfangsfläche einen sich in Einsteckrichtung axial erstreckenden und im Durchmesser reduzierten Dichtbereich aufweist, in dem die Umfangsdichtung angeordnet ist. Durch diese Umfangsdichtung ist das Ringteil an seinem äußeren Umfang gegen die innere Umfangsfläche eines Anschlusskörpers, insbesondere gegen Verunreinigungen, abdichtbar. Wegen des radialen Ebenenversatzes wird die Umfangsdichtung vor äußeren Umwelteinflüssen von der Betätigungsoberfläche geschützt. Die Betätigungsoberfläche ermöglicht weiterhin, dass ein Anwender eine Kraft auf das Löseelement in die Einsteckrichtung ausüben kann, wodurch sich das Löseelement axial verschieben lässt.

Insbesondere kann die äußere Umfangsdichtung aus einem ringförmigen Dichtkörper bestehen, der in Einsteckrichtung betrachtet eine radial nach außen abweisende Dichtlippe aufweist, wobei der äußere Durchmesser der Dichtlippe vorzugsweise größer ist als der innere Durchmesser des Anschlusskörpers im Bereich seiner inneren Umfangswand. Vorteilhafterweise liegt die Dichtlippe der äußeren Umfangsdichtung an der Umfangswand des Anschlusskörpers derart an, dass eine umfangsgemäße Abdichtung gegen Verunreinigungen gewährleistet ist, und sich aufgrund eines im Innern vorhandenen Innendrucks eines Druckmediums bei einer nicht vollständig eingesteckten Rohrleitung ein Leckagespalt durch ein Abknicken oder Aufbiegen der Dichtlippe ausbildet. Somit wird der Leckagespalt im Falle eines im Innenraum entstehenden Überdrucks im Bereich der Dichtung erzeugt. Durch den entstehenden Leckagespalt kann das Druckmedium, insbesondere Druckluft, nach außen austreten, wodurch das Zischgeräusch entsteht.

In einer weiteren erfindungsgemäßen Ausführung weist die innere Umfangsdichtung einen ringförmigen Dichtkörper auf, welcher zur Ringöffnung hin eine verrundete Dichtfläche aufweist, wobei der kleinste Durchmesser der Dichtfläche vorzugsweise kleiner ist als der äußere Durchmesser der einzusteckenden Rohrleitung. Durch die Verrundung der Dichtfläche sind nur geringe Montagekräfte notwendig.

Vorzugsweise weist die innere Umfangsdichtung umlaufend einen U-förmigen Aufbau auf, dessen Öffnung radial nach außen geöffnet ist, wodurch das Anlage-und Verformungsverhalten im statischen sowie im druckbelasteten Zustand und die Anlagekräfte der Umfangsdichtung in Bezug zur Rohrleitung weitgehend beeinflussbar sind.

Gemäß einer bevorzugten Ausführung sind in Einsteckrichtung betrachtet hinter der Umfangsdichtung am Außenumfang des Ringteils mindestens zwei, insbesondere vier Ansätze angeordnet, welche aus demselben Werkstoff bestehen wie die Umfangsdichtungen und einstückig mit der Umfangsdichtung verbunden sind, wobei die Ansätze über den kreisförmigen Umfang des Ringteils gleichmäßig, mit einem gleichen Umfangsabstand zueinander, angeordnet sind, wobei im montierten Zustand die vom Ringteil abweisende Oberfläche der Ansätze zumindest teilweise radial gegen eine sich konisch verengende Oberfläche des Anschlusskörpers gepresst wird und eine Rückstellkraft entgegen der Einsteckrichtung bewirkt. Insbesondere sind zwei um 180° versetzte Ansätze am Außenumfang des Ringteils angeordnet, besonders bevorzugt sind vier um 90° versetzte Ansätze am Außenumfang des Ringteils angeordnet.

Eine weitere mögliche Ausführung besteht darin, an mindestens zwei Ansätzen sich axial in Einsteckrichtung erstreckende Ambosse anzuformen, wobei die Ambosse eine in Einsteckrichtung gerichtete Stirnseite aufweisen, welche im montierten Zustand gegen eine, gegen die Einsteckrichtung gerichtete Stirnwand eines Lagerelements gepresst wird. Die Ambosse stützen sich auf dem Lagerelement ab und erzeugen eine Vorspannkraft, die rückwirkend auf das Löseelement wirkt. Um die Vorspannkräfte zu beeinflussen, haben die Ambosse eine zur konisch verengenden Oberfläche des Anschlusskörpers gerichtete Umfangsfläche, welche insbesondere eine konkav geformte Oberfläche aufweist. In diesem Sinne und um das Anlageverhalten zu verbessern, können die Ambosse sich in Einsteckrichtung insbesondere zunehmend im Umfang verbreitern.

Weiterhin kann der Anschlusskörper ein in Einsteckrichtung axiales zweigeteiltes Gehäuse sein, mit einem ersten, in Einsteckrichtung weisenden Gehäuseteil und einem zweiten, eine Mündungsseite der Aufnahmeöffnung aufweisenden hülsenförmigen Gehäuseteil, die miteinander verbindbar sind.

In einer weiteren vorteilhaften Ausführungsform weist die äußere Umfangsdichtung des Löseelements ein oder mehrere in axialer Richtung versteifte Teilbereiche auf. Die Versteifungen in axialer Richtung verhindern und/oder erschweren das Öffnen der Dichtlippe in diesem Bereich. Vorteilhaft lässt sich durch diese Ausführung die Durchflussmenge im Leckagefall einstellen. Eine Einstellung des Leckagevolumens ist vorteilhaft, damit trotz unvollständiger Steckung sichergestellt werden kann, dass das Leckagevolumen zuverlässig, z. B. durch einen Kompressor, nachgefördert werden kann.

Weitere vorteilhafte Ausgestaltungen der Erfindung ergeben sich aus der folgenden Figurenbeschreibung und den abhängigen Unteransprüchen.

Es zeigen:
- Fig. 1: einen Längsschnitt A-A gemäß Fig. 3 durch eine erste Ausführungsform einer erfindungsgemäßen Anschlussvorrichtung mit voll eingesteckter Rohrleitung,
- Fig. 2: einen Längsschnitt C-C gemäß Fig. 3 durch die erste Ausführungsform einer erfindungsgemäßen Anschlussvorrichtung mit voll eingesteckter Rohrleitung,
- Fig. 3: eine Draufsicht in Einsteckrichtung auf die erste Ausführungsform einer erfindungsgemäßen Anschlussvorrichtung mit eingesteckter Rohrleitung,
- Fig. 4: eine perspektivische Ansicht eines Löseelements der ersten Ausführungsform einer erfindungsgemäßen Anschlussvorrichtung,
- Fig. 5: eine Schnittansicht D-D durch die Ausführungsform gemäß Fig. 1 mit eingesteckter Rohrleitung,
- Fig. 6: eine Schnittansicht B-B durch die Ausführungsform gemäß Fig. 1 mit eingesteckter Rohrleitung,
- Fig. 7a: eine vergrößerte Darstellung der Einzelheit T in Fig. 1,
- Fig. 7b: eine vergrößerte Darstellung der Einzelheit im Bereich T in Fig. 6 bei einem erfindungsgemäßen Lösevorgangs,
- Fig. 8a: eine perspektivische Ansicht einer zweiten Ausführungsform eines Löseelements einer erfindungsgemäßen Anschlussvorrichtung,
- Fig. 8b: einen Längsschnitt A-A gemäß Fig. 3 durch die zweite Ausführungsform eines erfindungsgemäßen Löseelements gemäß Fig. 8a,
- Fig. 8c: einen Längsschnitt C-C gemäß Fig. 3 durch die zweite Ausführungsform eines erfindungsgemäßen Löseelements gemäß Fig. 8a,
- Fig. 8d: eine Schnittansicht E-E durch die Ausführungsform gemäß Fig. 8b,
- Fig. 9a: eine perspektivische Ansicht einer dritten Ausführungsform eines Löseelements einer erfindungsgemäßen Anschlussvorrichtung,
- Fig. 9b: einen Längsschnitt A-A gemäß Fig. 3 durch die dritte Ausführungsform eines erfindungsgemäßen Löseelements gemäß Fig. 9a,
- Fig. 9c: einen Längsschnitt C-C gemäß Fig. 3 durch die dritte Ausführungsform eines erfindungsgemäßen Löseelements gemäß Fig. 9a und
- Fig. 9d: eine Schnittansicht F-F durch die Ausführungsform gemäß Fig. 9b.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

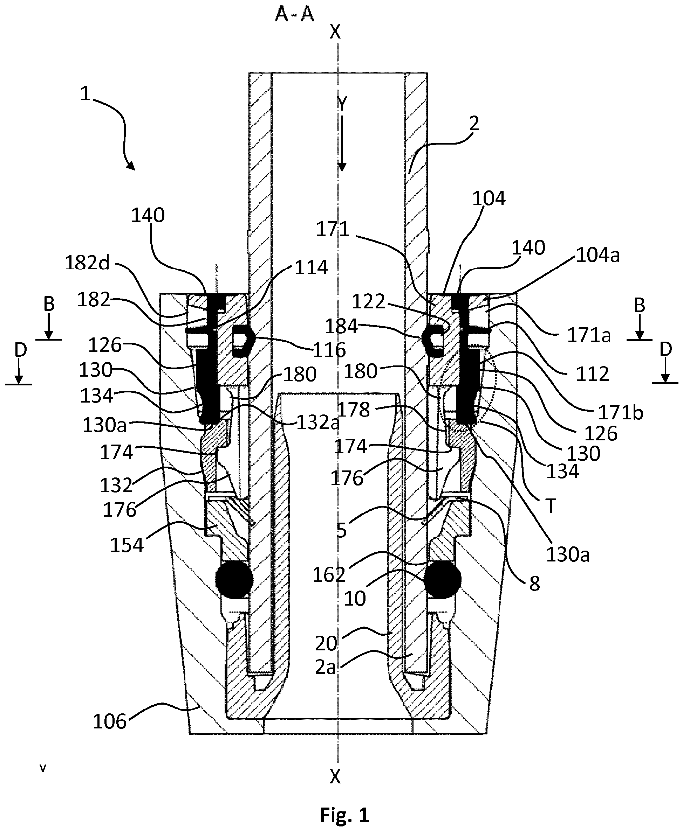

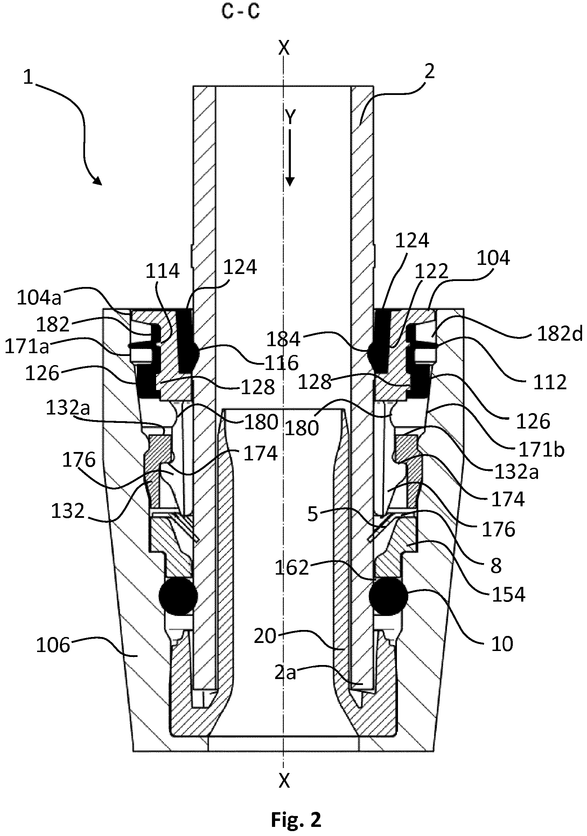

In Fig. 1 bis 3 ist eine erfindungsgemäße Anschlussvorrichtung 1 zum schnellen und auch lösbaren Anschluss einer Rohrleitung 2 durch das einfache Einstecken eines Leitungsendes 2a in eine Aufnahmeöffnung eines Anschlusskörpers 106 veranschaulicht. Die Einsteckrichtung Y ist in Fig. 1 und 2 jeweils mit einem Pfeil veranschaulicht. Da somit kein Anschlussdorn zum Aufstecken der Rohrleitung 2 vorhanden ist, kann auch von einem "Dornlos-Stecksystem" gesprochen werden. Zum Arretieren des eingesteckten Leitungsendes 2a gegen Herausziehen ist innerhalb der Aufnahmeöffnung ein Halteelement 5 gelagert, welches insbesondere als federelastischer Zahnring mit einem äußeren Umfangsbereich 8 und mit mehreren über den Umfang verteilt angeordneten, sich radial nach innen und schräg in Einsteckrichtung Y geneigt erstreckenden und dadurch widerhakenartig kraft- und/oder formschlüssig gegen die äußere Umfangsfläche des Leitungsendes 2a wirkenden Haltezähnen ausgebildet ist. Zur Abdichtung der eingesteckten Rohrleitung 2 nach außen ist zudem innerhalb des Anschlusskörpers106 mindestens eine Umfangsdichtung 10 gelagert, die einen radial zwischen dem Leitungsende 2a und dem Anschlusskörper 106 gebildeten Ringspalt nach außen abdichtet.

Der äußere Umfangsbereich 8 des Halterings 5 liegt im unverformten Zustand in einer zur Längsachse X-X der Anschlussvorrichtung 1 senkrechten Ebene, während die Haltezähne gemeinsam durch ihre Schrägstellung umlaufend konusförmig ausgerichtet sind. Die Haltezähne definieren mit ihren inneren Haltekanten einen Umkreis, dessen Durchmesser im unverformten Zustand kleiner als der Außendurchmesser der Rohrleitung 2 ist. Dadurch wirken die Haltekanten mit einer radialen Haltekraft insbesondere formschlüssig oder zumindest kraftformschlüssig gegen den Außenumfang des eingesteckten Leitungsendes 2a.

Der Haltering 5 ist insbesondere mit seinem äußeren Umfangsbereich 8 mit einem definiert begrenzten axialen und radialen Bewegungsspiel innerhalb des Anschlusskörpers 106 gelagert. Dieses axiale und radiale Bewegungsspiel wird durch beidseitige, axial gegenüberliegende Anlageabschnitte innerhalb des Anschlusskörpers 106 begrenzt. Vorteilhaft kann sich der Haltering 5 durch das axiale und radiale Bewegungsspiel besser zu der einzusteckenden Leitung zentrieren. Weiterhin wirkt der Haltering 5 am winkligen Übergang zwischen dem äußeren Umfangsbereich 8 und den Haltezähnen derart mit einer innerhalb des Anschlusskörpers 106 am radial inneren Umfang der den ersten Anlageabschnitt bildenden radialen Anlagefläche vorgesehenen, umfangsgemäßen Kippkante zusammen, dass beim Einstecken des Leitungsendes 2a durch dessen Anlage an den Haltezähnen der Haltering 5 aus einer mit seinem äußeren Umfangsbereich 8 gegen den ersten, unteren Anlageabschnitt gedrückt wird und wippenartig um die Kippkante verschwenkt wird, bis der äußere Umfangsbereich 8 radial außenseitig zur abgestützten Anlage an dem zweiten, axial gegenüberliegenden oberen Anlageabschnitt gelangt. Wenn ausgehend von dieser Stellung das Leitungsende 2a weiter in Einsteckrichtung Y bewegt wird, erfolgt eine elastische Biegeverformung im Wesentlichen nur noch im Bereich der die Kippkante radial nach innen überragenden Haltezähne. Der Einsteckvorgang wird dann abgeschlossen, indem das Leitungsende 2a etwas gegen die Einsteckrichtung Y zurückgezogen wird. Dadurch schneiden sich die Haltezähne formschlüssig oder zumindest kraftformschlüssig in den Außenumfang des Leitungsendes 2a ein.

Vorteilhafterweise ist innerhalb der Aufnahmeöffnung des Anschlusskörpers 106 eine Stützhülse 20 derart koaxial angeordnet, dass das Leitungsende 2a beim Einstecken auf eine zylindrische Außenfläche der Stützhülse 20 aufschiebbar ist. Dadurch wird das eingesteckte Leitungsende 2a von der Stützhülse 20 radial abgestützt, so dass bei Beaufschlagung mit einer von dem Haltering 5 bewirkten radialen Haltekraft Verformungen der Rohrleitung 2 im Wirkbereich des Halterings 5 vermieden werden.

Die oben beschriebene Kippkante für den Haltering 5 kann mit Vorteil an einem Einsatzring 154 gebildet sein, der bevorzugt auch den ersten Anlageabschnitt in Form einer radial nach außen an die Kippkante angrenzenden, zur Längsachse X-X senkrechten Stirnfläche aufweist. Die Kippkante ist somit am Übergang zwischen der den ersten Anlageabschnitt bildenden Stirnfläche und einer innen angrenzenden Konusfläche gebildet.

Der Einsatz des Einsatzrings 154 in den Anschlusskörper 106 wird insbesondere als Übergangspassung umgesetzt. Hierbei ist insbesondere vorgesehen, dass der Einsatzring 154 innerhalb des Anschlusskörpers 106 mit seiner in Einsteckrichtung weisenden Stirnfläche gemeinsam mit einer dieser axial gegenüberliegenden Flankenfläche des Anschlusskörpers 106 eine Dichtungskammer 162 für die Rohr-Umfangsdichtung 10 begrenzt. Bei der Umfangsdichtung 10 handelt es sich bevorzugt ebenfalls um einen O-Ring, der für eine Anwendung bei Druckluft-Rohrleitungen vorzugsweise aus EPDM (Ethylen-Propylen-Dien-Monomer) oder NBR (Nitrile Butadiene Rubber = Nitril Katuschuk) besteht und für eine Anwendung bei Kraftstoff-Rohrleitungen aus einem Fluor-Elastomer.

Der Einsatzring 154 entkoppelt vorteilhafterweise die Bauräume für das Halteelement 5 einerseits und das Dichtelement 10 andererseits. Insbesondere in Kombination mit der Stützhülse 20 werden Exzentrizitäten und Ovalitäten der Rohrleitung 2 im Bereich zwischen Dichten und Halten vermieden bzw. kompensiert. Bevorzugt besteht der Einsatzring 54 aus einem Kunststoff, insbesondere POM ohne Glasfaserverstärkung, PBToder PA6.6, gegebenenfalls mit Glasfaser-Anteil GF30 %. Alternativ kann der Einsatzring 54 auch aus Metall, insbesondere Aluminium bestehen.

Für eine Lösbarkeit der eingesteckten und über den Haltering 5 fixierten Rohrleitung 2 ist ein hülsenförmiges Löseelement 170 vorgesehen. Dieses Löseelement 170 greift derart axial verschiebbar in den Anschlusskörper 106 ein, dass durch Einschieben des Löseelementes 170 in Einsteckrichtung Y der Haltering 5 zur Freigabe des Leitungsendes 2a im Bereich der Haltezähne elastisch verformbar ist. Dazu wirkt das Löseelement 170 mit Betätigungsabschnitten gegen den Haltering 5, zum Beispiel gegen die Haltezähne.

Das Löseelement 170 ist bevorzugt innerhalb des Anschlusskörpers 106 über eine Verrastung 174 gegen Demontage gehalten. Dazu weist das Löseelement 170 an seinem in Einsteckrichtung Y weisenden Ende durch axiale Schlitze beabstandete Rastarme 176 auf, die einendig an dem umfangsgemäß geschlossenen Ringteil 171 angeformt sind, und die mit radial nach außen weisenden Rastnasen eine radiale Stufenfläche 178, siehe Fig. 1 und 2, hintergreifen, wobei diese Stufenfläche 178 durch ein hülsenförmiges Lagerelement 132 gebildet ist. Insbesondere ist die Lageposition des Lagerelements 132 innerhalb des Anschlusskörpers fixiert. Wie in Fig. 1 und 2 veranschaulicht, ist das Lagerelement 132 auf axialer Höhe radial zwischen dem Anschlusskörper 106 und den Rastarmen 176 angeordnet. Zur Arretierung des Lagerelements 132 weist der Anschlusskörper 106 im Bereich des Lagerelements 132 eine umlaufende Nut mit einem vergrößerten Durchmesser auf, wobei sich der Durchmesser der Nut in Einsteckrichtung Y konisch wieder auf den Durchmesser im Bereich des Einsatzrings 154 reduziert. Das Lagerelement 132 weist einen Körper auf, dessen in Einsteckrichtung Y vorderster Grundkörper eine Stufenfläche 178 für die Rastarme 176 darstellt, weiterhin erstreckt sich der Körper des Lagerelements 132 derart in Einsteckrichtung Y, dass es mit einer in die Einsteckrichtung Y gerichteten Oberfläche die Anlagefläche für das Halteelement 5, insbesondere für den äußeren Umfangsbereich 8, definiert. Insbesondere bildet das Lagerelement 132 eine Nut zwischen der Anlagefläche für das Halteelement 5 und dem Einsatzring 154, in der das Halteelement 5 insbesondere geringfügig radial- und axialverschiebbar gelagert ist. Vorzugsweise hält das Lagerelement 132 die Rastarme 176 des Löseelements 170, so dass das Löseelement 170 nicht axial gegen die Einsteckrichtung Y aus dem Anschlusskörper 106 fallen kann.

In einer weiteren vorteilhaften Ausgestaltung sind die Rastarme 176 mit dem umfangsgemäß geschlossenen Ringteil 171 des Löseelementes 170 über scharnierartige Einschnürungen 180 verbunden, wodurch die radiale Beweglichkeit der Rastarme 176 für die Montage des Löseelements 170 in das Lagerelement 132 begünstigt wird.

Weiterhin weist das Löseelement 170 im Bereich des Ringteils 171 einerseits eine äußere Umfangsdichtung 182 und andererseits eine innere Umfangsdichtung 184 auf. Die äußere Umfangsdichtung 182 dient zur Abdichtung eines Ringspaltes zwischen dem Ringteil 171 des hülsenförmigen Löseelementes 170 und dem Anschlusskörper 106. Die innere Umfangsdichtung 184 dichtet einen Ringspalt zwischen dem Ringteil 171 und dem Leitungsende 2a ab.

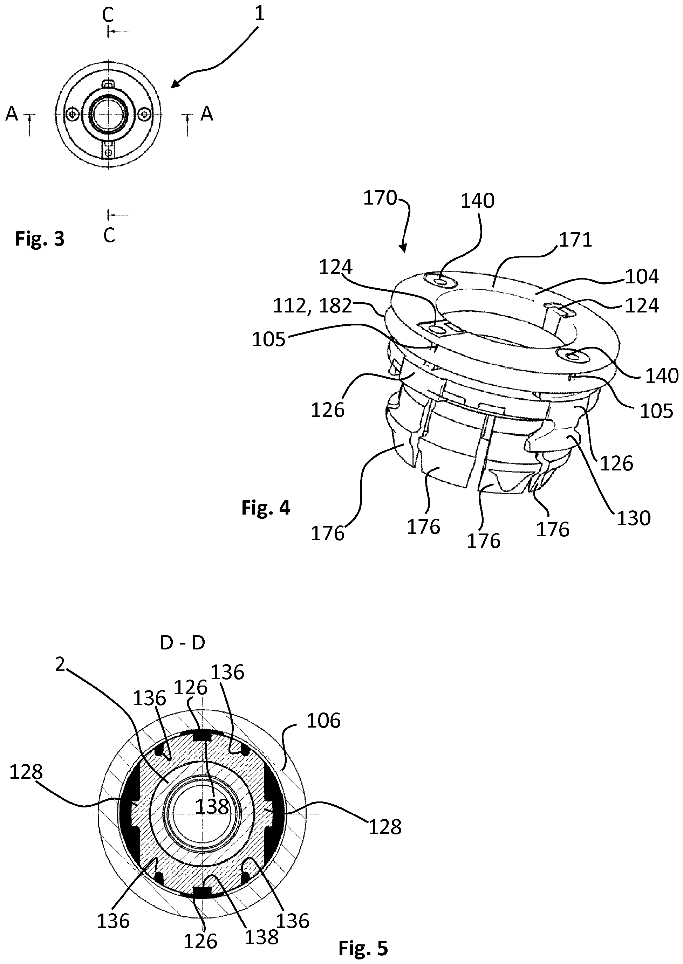

Gemäß der Ausführung, wie sie in den Fig. 1 bis 3 dargestellt ist, ist das erfindungsgemäße Löseelement 170 ein stoffschlüssiges Zweikomponententeil, bestehend aus dem Ringteil 171 und den Umfangsdichtungen 182, 184, wobei die Umfangsdichtungen 182, 184 aus einem elastischeren Werkstoff bestehen als das Ringteil 171; in den Fig. 1 und 2 sind die zwei Komponenten durch die unterschiedlichen Kontraste gekennzeichnet. Losgelöst von der Anschlussvorrichtung 1 ist ein derartiges Löseelement in Fig. 3 und 4 dargestellt.

Vorteilhaft ist zudem, wenn das Löseelement 170 eine entgegen der Einsteckrichtung Y gerichtete äußeren Betätigungsoberfläche 104 aufweist. Das Ringteil 171 kann dafür im montierten Zustand mit einer äußeren Umfangsfläche 104a umlaufend an der inneren Umfangswandung 171a des Anschlusskörpers 106 anliegen. Dabei weist das Ringteil, wie in Fig. 1 und 2 dargestellt, in Einsteckrichtung Y gesehen, hinter der äußeren Umfangsfläche 104a einen sich in Einsteckrichtung Y axial erstreckenden und im Durchmesser reduzierten Dichtbereich 182d auf, in dem die Umfangsdichtung 182 angeordnet ist.

Im Sinne der Erfindung besteht die äußere Umfangsdichtung 182 aus, in Einsteckrichtung Y betrachtet, einem ringförmigen Dichtkörper, welcher insbesondere eine radial nach außen abweisende Dichtlippe 112 aufweist, wobei der äußere Durchmesser der Dichtlippe 112 im Durchmesser vorzugsweise größer ist als der innere Durchmesser des Anschlusskörpers 106 im Bereich seiner inneren Umfangswand 171a. Insbesondere kann die Dichtlippe sich senkrecht zur Einsteckrichtung Y radial in Richtung der inneren Umfangswand 171a des Anschlusskörpers erstrecken, wobei die innere Umfangswand 171a ganz oder teilweise im Bereich der Dichtlippe zylindrisch geformt sein kann.

Wie beispielsweise in Fig. 1 dargestellt, liegt die Dichtlippe 112 der äußeren Umfangsdichtung 182 an der Umfangswand 171a des Anschlusskörpers 106 derart an, dass durch den im Innern vorhandenen Innendruck des Druckmediums bei nicht vollständig eingesteckter Rohrleitung 2 der Leckagespalt sich durch ein Abknicken oder Aufbiegen der Dichtlippe 112 ausbildet. Insbesondere während sich der Leckagespalt ausbildet, knickt die Dichtlippe 112 derartig ab, dass durch das entweichende Medium ein akustisches Signal für den Anwender zu vernehmen ist. Weiterhin ist dies ein wiederholbarer Vorgang; sobald der Innendruck wieder in einem "normalen" Zustand ist, nimmt die Dichtlippe 112 wieder ihre Dichtlage ein.

Vorteilhaft kann die Dichtlippe 112 beeinflusst werden, wenn das Ringteil 171, in Einsteckrichtung Y betrachtet, auf der axialen Höhe der Dichtlippe eine umlaufende Rippe 114 aufweist, welche sich umlaufend radial in die Dichtlippe 112 erstreckt. Diese Rippe 114, wie sie in Fig. 1 und 2 dargestellt ist, dient vorteilhaft dazu, dass sich die Dichtlippe 112 nicht oder nur begrenzt relativ zum Ringteil 171 verschiebt.

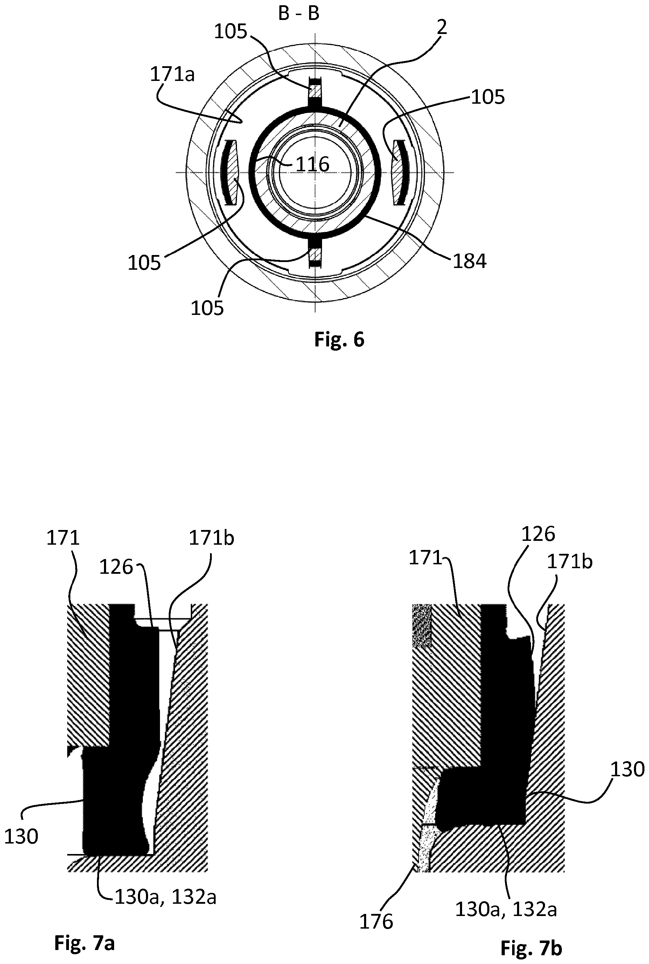

Eine weitere vorteilhafte Ausführung im Sinne der Erfindung liegt vor, wenn die innere Umfangsdichtung 184 einen ringförmigen Dichtkörper aufweist, welcher zur Ringöffnung hin eine verrundete Dichtfläche 116 aufweist. Diese Dichtfläche 116 ist, wie in Fig. 1 und 2 dargestellt, so bemessen, dass der kleinste Durchmesser der Dichtfläche 116 vorzugsweise kleiner ist als der äußere Durchmesser der einzusteckenden Rohrleitung 2. Bevorzugt weist das Ringteil 171 des Löseelementes 170 eine zur einzusteckenden Rohrleitung 2 hin geöffnete Umfangsspalt 122 auf, in welchen die Umfangsdichtung 184 angeordnet ist. Gemäß einer vorteilhaften Ausführung weist das Löseelement 170 axial zwei Bauteilabschnitte auf, einen oberen Abschnitt, welcher die Betätigungsoberfläche 104 aufweist und einen unteren Abschnitt, an welchem insbesondere die Rastarme 176 angeformt sind, wobei die Bauteilabschnitte mittels Verbindungsstegen 105 miteinander verbunden sind, und die innere Umfangsdichtung 184 sowohl mit dem oberen, als auch mit dem unteren Abschnitt verbunden ist. Vorteilhafterweise besteht das Ringteil 171 einstückig aus dem oberen Abschnitt, den Verbindungsstegen 105 und dem unteren Abschnitt. Der Schnitt B-B gemäß Fig. 1 in Fig. 6 verläuft durch die Verbindungsstege 105. Die Umfangsdichtung 184 ist insbesondere U-förmig zwischen dem oberen und dem unteren Abschnitt ausgebildet und ist radial nach außen weisend geöffnet. Durch die U-förmig, radial nach außen weisende geöffnete Umfangsdichtung 184 wird die Montage bzw. die Anwendung durch ein verbessertes Anlageverhalten an einer zu verbindenden Leitung verbessert. Weiterhin ist das Löseelement 170 in sich flexibler und kann Spannungen, die während des Betriebes auftreten, ausgleichen.

In einer weiteren bevorzugten Ausführung sind die Verbindungsstege 105, insbesondere wie in Fig. 6 dargestellt, vier Verbindungsstege 105, auf einem gemeinsamen Umfang relativ zur Aufnahmeöffnung spiegelnd gegenüberliegend angeordnet. In diesem besonderen Fall kann es vorteilhaft sein, wenn das U-förmige Profil der inneren Umfangsdichtung 184 insbesondere nur im Bereich einer oder mehrerer der Verbindungsstege 105 derartig unterbrochen ist, dass die Umfangsdichtung 184 nur den Zwischenraum zwischen dem Verbindungssteg 105 und der Dichtfläche 116 vollständig ausfüllt. In dem bevorzugten Ausführungsbeispiel, wie es in Fig. 6 dargestellt ist, ist das U-förmige Profil der inneren Umfangsdichtung 184 an zwei Stellen unterbrochen und vollständig ausgefüllt, wobei das Löseelement 170 insgesamt vier Verbindungsstege 105 aufweist. Die Anordnung der Verbindungsstege 105 ermöglichen eine besonders einfache Entformung ohne eine Verwendung von Querschiebern bei der Herstellung des Löseelements 170. Erfindungsgemäß werden bei der Anordnung der Verbindungsstege 105 die Anzahl und die Breite der lokalen Versteifungen so gering wie möglich gehalten, insbesondere weist daher die Ausführung gemäß Fig. 6 vorteilhaft nur zwei partielle Füllungen auf, die jeweils nur so breit sind wie ein Verbindungssteg 105. Die minimale Ausführung der Versteifungen ist ein vorteilhafter Kompromiss zwischen Dichtwirkung und Herstellungsaufwand. Ein Entformen hinter den Stegen 105 bedeutet einen hohen Aufwand, wohingegen die geringe Größe der Versteifungen die Dichtwirkung nur minimal beeinträchtigt. Sind die Verbindungsstege 105 alternativ um eine Stegbreite versetzt angeordnet, kann auch vorteilhaft die insbesondere U-förmige innere Umfangsdichtung 184 umlaufend radial nach außen weisend geöffnet sein, ohne den Produktionsaufwand maßgeblich zu steigern, wodurch die Dichtwirkung optimiert wird.

Eine weitere bevorzugte Ausführung sieht vor, dass die äußere Umfangsdichtung 182 und die innere Umfangsdichtung 184 einstückig, insbesondere axial zwischen den Bauteilabschnitten, miteinander verbunden sind.

Um die Verbindung zwischen dem Ringteil 171 und der Umfangsdichtung 184, insbesondere bei einer Zweikomponentenausführung des Löseelementes 170, zu verbessern, kann das Ringteil 171, wie in Fig. 4 dargestellt, über seinen Innenumfang zur Aufnahmeöffnung hin offene, partiell verteilte Kerben 124 aufweisen. Die Kerben 124 sind vorteilhaft von der inneren Umfangsdichtung 184 ausgefüllt. Es hat sich herausgestellt, dass eine qualitativ günstige Verbindung von dem Ringteil 171 mit der inneren Umfangsdichtung 184 besteht, wenn die Kerben 124 an der in Einsteckrichtung Y gesehen vordersten Oberfläche des Ringteils 171 des Löseelements 170 beginnen und insbesondere zwischen dem oberen Abschnitt des Ringteils 171 und dem unteren Abschnitt des Ringteils 171 enden.

Gemäß einer vorteilhaften Variante der Anschlussvorrichtung 1, wie sie in Fig. 1 bis 3 dargestellt ist, weist die Anschlussvorrichtung 1 ein Löseelement 170 auf, bei welchem in Einsteckrichtung Y betrachtet hinter der Umfangsdichtung 182 am Außenumfang des Ringteils 171 mindestens zwei, insbesondere vier, Ansätze 126 angeordnet sind, welche aus demselben Werkstoff bestehen wie die äußere Umfangsdichtung 182 sowie die innere Umfangsdichtung 184 und einstückig mit der Umfangsdichtung 182 verbunden sind. Es ist anzustreben, dass die Ansätze 126 über den kreisförmigen Umfang des Ringteils 171 gleichmäßig, mit einem gleichen Umfangsabstand zueinander, angeordnet sind. Insbesondere sind zwei um 180° versetzte Ansätze 126 am Außenumfang des Ringteils angeordnet, am bevorzugtesten, wie in Fig. 1 bis 3 dargestellt, sind vier um 90° versetzte Ansätze 126 am Außenumfang des Ringteils angeordnet. Dabei sind im montierten Zustand die vom Ringteil 171 abweisenden Oberflächen der Ansätze 126 zumindest teilweise radial gegen eine, sich konisch verengende, Oberfläche 171b des Anschlusskörpers 106 gepresst. Durch diese Ausführungsform wird die äußere Umfangsdichtung 182 nicht mehr benötigt, um eine vorteilhafte Rückstellkraft entgegen der Einsteckrichtung Y bewirken, wodurch die äußere Umfangsdichtung 182, insbesondere die Dichtlippe 112, entlastet wird. Die Rückstellkraft wird gemäß dieser Ausführung durch das zumindest teilweise Anpressen der Oberfläche der Ansätze 126 gegen die sich konisch verengende Oberfläche 171b des Anschlusskörpers 106 erzeugt, dabei ist es zweckdienlich, wenn die Ansätze 126 aus dem gleichen elastischen Werkstoff bestehen wie die äußere Umfangsdichtung 182. Ein weiterer vorteilhafter Effekt ist, dass die Ansätze 126 in einem Herstellungsprozess mit der Umfangsdichtung geformt werden können.

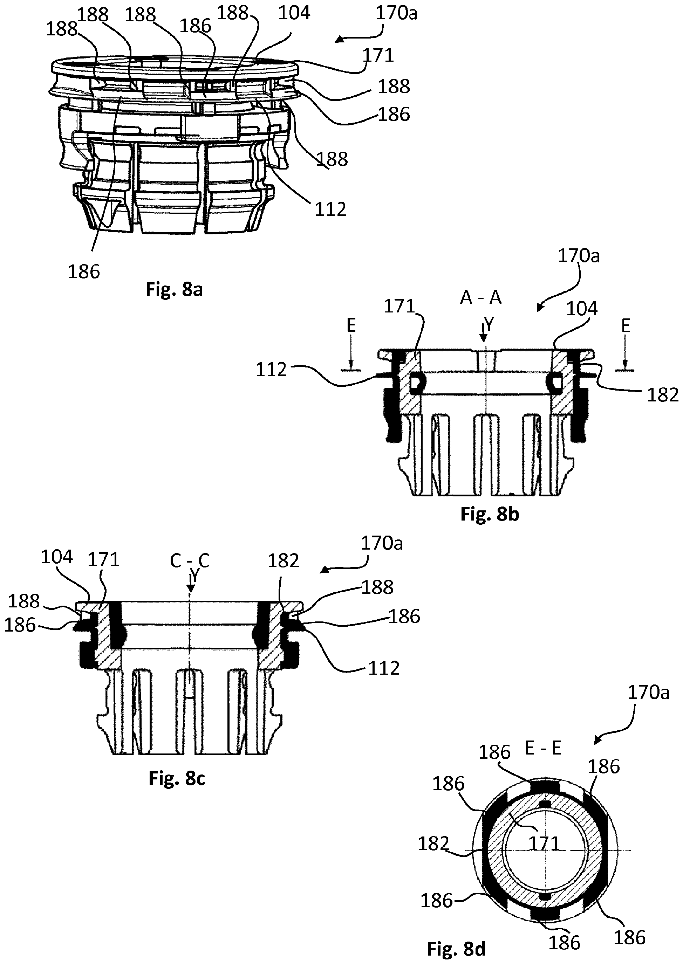

Um an den Stellen der Ansätze 126 die Verbindung zwischen Ringteil 171 und Ansatz 126 zu verbessern, kann das Ringteil 171 insbesondere ein oder mehrere Anker 128 aufweisen, die in Einsteckrichtung Y betrachtet auf der axialen Höhe der Ansätze 126 angeordnet sind und sich jeweils radial in einen Ansatz 126 erstrecken. Wie in Fig. 2 dargestellt, erstreckt sich jeweils ein Anker 128 in einen Ansatz 126, wobei der Anker 128 von dem jeweiligen Ansatz 126 vollständig umschlossen ist. Im dargestellten Ausführungsbeispiel gemäß Fig. 8 weisen zwei Ansätze 126 jeweils einen Anker 128 auf, vgl. Schnitt C-C, Fig. 2, und zwei Ansätze 126 weisen keine Anker 128 auf, vgl. Schnitt A-A, Fig. 1.

Eine erweiterte Ausführungsform der Ansätze 126 beinhaltet, dass insbesondere an mindestens zwei Ansätzen 126 sich axial in Einsteckrichtung Y erstreckende Ambosse 130 angeformt sind. Die Ambosse 130 weisen eine in Einsteckrichtung Y gerichtete Stirnseite 130a auf, welche im montierten Zustand insbesondere gegen eine gegen die Einsteckrichtung Y gerichtete Stirnwand 132a des Lagerelements 132 gepresst wird. Diese Ausführungsform ermöglicht es, dass mit der Arretierung des Löseelements 170, d. h. mit der Montage im Anschlusskörper 106, die Ambosse 130 insbesondere eine rückfedernd wirkende Vorspannkraft gegen die Einsteckrichtung Y ausüben. Insbesondere wird dadurch eine axiale Verschiebung in Einsteckrichtung Y des Löseelements 170 und synergetisch damit auch eine Leitungsentnahme verhindert.

In Fig. 1 und 4 ist eine vorteilhafte Formgebung der Ambosse 130 dargestellt. Die Ambosse 130 können wie abgebildet eine zur konisch verengenden Oberfläche 171b des Anschlusskörpers 106 gerichtete Umfangsfläche 134 aufweisen, welche eine konkav geformte Oberfläche aufweist. Weiterhin ist dargestellt, dass die Ambosse 130 sich in Einsteckrichtung Y zunehmend im Umfang verbreitern können. Mittels der konkaven Oberfläche der Ambosse wird die Verformung der Ambosse beim Pressen bzw. bei der Montage beeinflusst und ein Volumen für ein Material vom Amboss 130 geschaffen, welches beim Verpressen von dem Amboss 130 ausgefüllt wird. Aufgrund der verbreiterten Umfangsfläche der Ambosse 130 weist die in Einsteckrichtung Y gerichtete Stirnseite 130a eine vergrößerte Oberfläche auf; insbesondere beim Pressen gegen die Stirnwand 132a des Lagerelements 132 wird die Kraft von den Ambossen 130 gleichmäßiger auf das Lagerelement 132 ausgeübt. Vorteilhafterweise wird damit der Amboss gegen seitliches Ausweichen bei Druck geschützt.

Demonstrativ veranschaulichen Fig. 7a und 7b einen erfindungsgemäßen Anpressvorgang. In Fig. 7a und 7b ist dargestellt, wie das Ringteil 171 Rastarme 176, einen Ansatz 126 und einen angeformten Amboss 130 aufweist. Dabei ist gut ersichtlich, wie der Ansatz 126 bzw. der Amboss 130 in Pressstellung, siehe 7b, gegen die konische Oberfläche des Anschlusskörpers 106 gepresst wird, und wie die Stirnseite 130a gegen die Stirnseite 132a gedrückt wird. Weiterhin ist zu sehen, wie durch das Verpressen der durch die konkave Form ermöglichte Freiraum vom Material des Ambosses 130 ausgefüllt wird.

Fig. 5 zeigt einen Schnitt durch eine erfindungsgemäße Anschlussvorrichtung 1, wie sie in Fig. 1 dargestellt ist. Dabei ist in Fig. 5 eine besondere Verbesserungsmöglichkeit bezüglich der Verbindung von der inneren Umfangsdichtung 184 und dem Ringteil 171 sowie der äußeren Umfangsdichtung 184 und dem Ringteil 171 dargestellt. Wie dargestellt, sind vorzugsweise in dem Ringteil 171, in Einsteckrichtung Y gesehen, jeweils zwischen Ansatz 126 und Anker 128 oberhalb der Ambosse 130 Nuten 136 eingekerbt, welche von der äußeren Umfangsdichtung 182 ausgefüllt sind. Zu dem selben Zweck der verbesserten Verbindung zwischen der äußeren und inneren Umfangsdichtung 182 ,184 mit dem Ringteil 171 dienen insbesondere Ansatznuten 138, die in dem Ringteil 171 oberhalb der Ambosse 130 eingekerbt sind, und welche von der äußeren Umfangsdichtung 182 ausgefüllt sind.

Zwecks einer verbesserten Verbindung selbiger Teile kann das Ringteil 171, wie in Fig. 1 dargestellt, insbesondere in der Betätigungsoberfläche 104 mindestens einen Durchbruch 140 aufweisen. Vorzugsweise führt dieser in den Dichtbereich 182d, wobei der Durchbruch 140 von der äußeren Umfangsdichtung 182 ausgefüllt ist. In einer weiterentwickelten Form können die Durchbrüche 140 derart ausgerichtet sein, dass sie insbesondere in den oder die Dichtbereich(e) 182d oberhalb eines, wie zuvor beschriebenen, Ansatzes 126 führen.

Fig. 8a bis 8d zeigen eine zweite bevorzugte Ausführungsform des Löseelements 170a. Diese Ausführungsform wird insbesondere in einen Anschlusskörper 106, wie für die erste Ausführungsform beschrieben, montiert, wobei das Löseelement 170a im Wesentlichen identisch mit dem Löseelement 170 gemäß der in Fig. 1 bis 7b dargestellten Ausführungsform ist und sich einzig in der Ausführung der Dichtbereiche 182d und der Gestaltung der äußeren Umfangsdichtung 182 unterscheidet.

Vorteilhaft weist die äußere Umfangsdichtung 182, bevorzugt die radial nach außen abweisende Dichtlippe 112, des Löseelements 170a insbesondere eine oder mehrere angeformte partielle Verdickungen 186 auf, die sich gegen die Einsteckrichtung Y, insbesondere in den Dichtbereich 182d erstrecken und vorzugsweise mittels angeformter Abstützrippen 188, bevorzugt rückseitig der Betätigungsoberfläche 104, am Ringteil 171 abgestützt werden. Diese verhindern das Öffnen der Dichtlippe in diesem Bereich. Vorteilhaft lässt sich durch diese Ausführung die Durchflussmenge im Leckagefall einstellen. Eine Einstellung des Leckagevolumens ist daher notwendig, damit ein Verbinder trotz unvollständiger Steckung den Betrieb, z. B. eines LKW, nicht beeinträchtigt. Das heißt, dass z. B. ein Kompressor trotz Leckage das Leckagevolumen nachfördern kann, und dadurch z. B. die Funktion der Bremse noch gewährleistet ist. Je nach Größe der Abstützung kann das Durchflussvolumen für unterschiedliche Größen angepasst werden. Die Aufteilung auf sechs Bereiche, wie in Fig. 8d dargestellt, ist vorteilhaft, da bei einer einseitigen Belastung die anderen Dichtlippen immer in der Lage sind, sich zu öffnen.

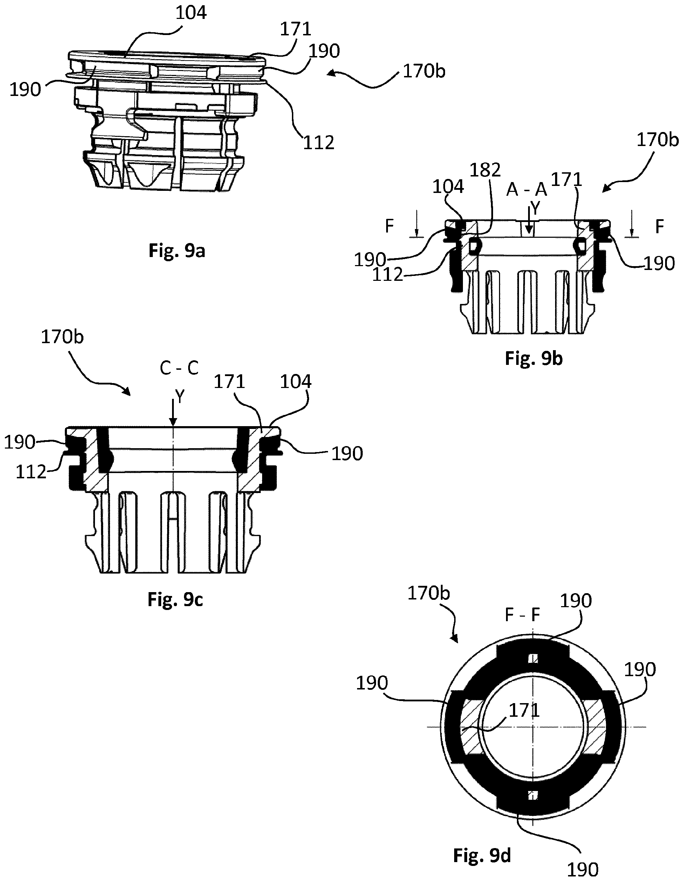

Fig. 9a bis 9d zeigen eine dritte vorteilhafte Ausführungsform des Löseelements 170b. Diese Ausführungsform wird insbesondere in einen Anschlusskörper 106, wie für die erste und zweite Ausführungsform beschrieben, montiert, wobei das Löseelement 170b im Wesentlichen identisch mit dem Löseelement 170, 170a gemäß der in Fig. 1 bis 8d dargestellten Ausführungsformen ist und sich einzig in der Ausführung der Dichtbereiche 182d und der Gestaltung der äußeren Umfangsdichtung 182 unterscheidet.

Vorteilhaft kann durch die Ausführung des Löseelements 170b ebenfalls wie beim Löseelement 170a, wie es in den Fig. 8a bis 8d dargestellt ist, die Durchflussmenge im Leckagefall eingestellt werden, wobei die Notwendigkeit und der Vorteil, wie in der Beschreibung zu der zweiten Ausführungsform des Löseelements 170a beschrieben, für die dritte Ausführungsform des Löseelements 170b identisch sind. Bevorzugt weist die äußere Umfangsdichtung 182, vorteilhaft die radial nach außen abweisende Dichtlippe 112, des Löseelements 170b insbesondere eine oder mehrere angeformte partielle Wülste 190 auf, die sich gegen die Einsteckrichtung Y, insbesondere in den Dichtbereich 182d, bis vorzugsweise rückseitig der Betätigungsoberfläche 104 zum Ringteil 171 erstrecken und an dem Ringteil 171 anliegen oder mit dem Ringteil 171 verbunden sind. Diese Wülste 190 verhindern das Öffnen der Dichtlippe in diesem Bereich. Je nach Einstellung der Durchflussmenge im Leckagefall kann die Größe der Wülste 190 angepasst werden. Bevorzugt ist die Aufteilung auf vier Bereiche, wie in Fig. 9d dargestellt, da bei einer einseitigen Belastung die anderen Dichtlippen immer in der Lage sind, sich zu öffnen.

Wenn auch nicht abgebildet, kann eine erfindungsgemäße Ausführung der Anschlussvorrichtung 1, wie sie in den Fig. 1 bis 3 dargestellt ist, einen Anschlusskörper 106 umfassen, welcher ein axiales, in Einsteckrichtung Y zweigeteiltes Gehäuse mit einem ersten, in Einsteckrichtung Y weisenden Gehäuseteil und einem zweiten, eine Mündungsseite der Aufnahmeöffnung aufweisenden hülsenförmigen Gehäuseteil aufweist, wobei diese miteinander verbindbar sind.

Die Erfindung ist nicht auf die dargestellten und beschriebenen Ausführungsbeispiele beschränkt, sondern umfasst auch alle in den Schutzbereich der, mit den angehängten Ansprüchen definierten, Erfindung fallenden Ausführungen.

### Bezugszeichenliste

- 1: Anschlussvorrichtung
- 2: Rohrleitung
- 2a: Leitungsende
- 5: Halteelement
- 8: Umfangsbereich
- 10: Umfangsdichtung
- 20: Stützhülse
- 104: Betätigungsoberfläche
- 104a: Umfangsfläche
- 105: Verbindungsstege
- 106: Anschlusskörper
- 112: Dichtlippe
- 114: Rippe
- 116: Dichtfläche
- 122: Umfangsspalt
- 124: Kerbe
- 126: Ansatz
- 128: Anker
- 130: Amboss
- 130a: Stirnfläche vom Amboss
- 132: Lagerelement
- 132a: Stirnfläche vom Lagerelement
- 134: Umfangsfläche vom Amboss
- 136: Nut
- 138: Ansatznut
- 140: Durchbruch
- 154: Einsatzring
- 162: Dichtungskammer
- 170: Löseelement
- 170a: Zweites Löseelement
- 170b: Drittes Löseelement
- 171: Ringteil
- 171a: Innere Umfangswandung
- 171b: konische Oberfläche
- 174: Verrastung
- 176: Rastarme
- 178: Stufenfläche Lagerelement
- 180: Einschnürungen
- 182: Äußere Umfangsdichtung
- 182d: Dichtbereich der äußeren Umfangsdichtung
- 184: Innere Umfangsdichtung
- 186: Partielle Verdickungen
- 188: Abstützrippen
- 190: Partielle Wulst

- X-X: Längsachse
- Y: Einsteckrichtung

## Patentansprüche

1. Anschlussvorrichtung (1) für Rohrleitungen (2) mit einem Anschlusskörper (106) mit einer Aufnahmeöffnung für eine mit einem Leitungsende (2a) in eine Einsteckrichtung (Y) einzusteckende Rohrleitung (2) und ein innerhalb der Aufnahmeöffnung gelagertes Halteelement (5) zum Fixieren des eingesteckten Leitungsendes (2a) gegen Herausziehen, wobei innerhalb des Anschlusskörpers (106) ein hülsenförmiges Löseelement (170, 170a, 170b) derart axial verschiebbar gelagert ist, dass durch Einwirken auf das Halteelement (5) die Fixierung der eingesteckten Rohrleitung (2) aufgehoben wird, wobei das Löseelement (170, 170a, 170b) aus einem umfangsgemäß geschlossenen Ringteil (171) besteht, an dem durch Längsschlitze voneinander getrennte Rastarme (176) ausgebildet sind, wobei das Ringteil (171) an seinem äußeren Umfang mittels einer Umfangsdichtung (182) gegen eine innere Umfangswand (171a) des Anschlusskörpers (106) und an seinem inneren Umfang im Bereich seiner Ringöffnung mittels einer Umfangsdichtung (184) gegen die eingesteckte Rohrleitung (2) abdichtbar ist,
**dadurch gekennzeichnet, dass** im montierten Zustand der Anschlussvorrichtung (1) im inneren Umfangsbereich des Ringteils (171) des Löseelementes (170, 170a, 170b) die äußere Umfangsdichtung (182) derart verformbar aus ihrer Dichtungslage ist, dass zwischen der äußeren Umfangsdichtung (182) und der gegenüberliegenden inneren Umfangswand (171a) des Anschlusskörpers (106) mindestens ein Leckagespalt durch einen im Innern der Anschlussvorrichtung (1) vorhandenen Innendruck des in der Rohrleitung (2) strömenden Druckmediums ausgebildet wird, und das Löseelement (170, 170a, 170b) ein stoffschlüssiges Zweikomponententeil aus dem Ringteil (171) und den Umfangsdichtungen (182, 184) ist, wobei die Umfangsdichtungen (182, 184) aus einem elastischeren Werkstoff bestehen als das Ringteil (171).

2. Anschlussvorrichtung nach Anspruch 1,
**dadurch gekennzeichnet, dass** das Ringteil (171) des Löseelementes (170, 170a, 170b) eine entgegen der Einsteckrichtung (Y) gerichtete äußere Betätigungsoberfläche (104) aufweist und im montierten Zustand mit einer äußeren Umfangsfläche (104a) umlaufend an der inneren Umfangswandung (171a) des Anschlusskörpers (106) anliegt, wodurch das Löseelement (170, 170a, 170b) in Einsteckrichtung (Y) gesehen hinter der äußeren Umfangsfläche (104a) einen sich in Einsteckrichtung (Y) axial erstreckenden und im Durchmesser reduzierten Dichtbereich (182d) aufweist, in dem die äußere Umfangsdichtung (182) angeordnet ist.

3. Anschlussvorrichtung nach Anspruch 1 oder 2,
**dadurch gekennzeichnet, dass** die äußere Umfangsdichtung (182) aus einem ringförmigen Dichtkörper besteht, der in Einsteckrichtung (Y) betrachtet eine radial nach außen abweisende Dichtlippe (112) aufweist, wobei der äußere Durchmesser der Dichtlippe (112) vorzugsweise größer ist als der innere Durchmesser des Anschlusskörpers (106) im Bereich seiner inneren Umfangswand (171a).

4. Anschlussvorrichtung nach Anspruch 3,
**dadurch gekennzeichnet, dass** das Ringteil (171), in Einsteckrichtung (Y) betrachtet, auf der axialen Höhe der Dichtlippe eine Rippe (114) aufweist, welche sich umlaufend radial in die Dichtlippe (112) erstreckt.

5. Anschlussvorrichtung nach einem der Ansprüche 1 bis 4,
**dadurch gekennzeichnet, dass** die innere Umfangsdichtung (184) einen ringförmigen Dichtkörper aufweist, welcher zur Ringöffnung hin eine verrundete Dichtfläche (116) aufweist, wobei der kleinste Durchmesser der Dichtfläche (116) vorzugsweise kleiner ist als der äußere Durchmesser der einzusteckenden Rohrleitung (2).

6. Anschlussvorrichtung nach einem der Ansprüche 2 bis 5,
**dadurch gekennzeichnet, dass** das Löseelement (170, 170a, 170b) axial zwei Bauteilabschnitte aufweist, einen oberen Abschnitt, welcher die Betätigungsoberfläche (104) aufweist und einen unteren Abschnitt, an welchem insbesondere die Rastarme (176) angeformt sind, wobei die Bauteilabschnitte mittels Verbindungsstegen (105) miteinander verbunden sind und die innere Umfangsdichtung (184) sowohl mit dem oberen, als auch mit dem unteren Abschnitt verbunden ist.

7. Anschlussvorrichtung nach Anspruch 6,
**dadurch gekennzeichnet, dass** das Ringteil (171) einstückig aus dem oberen Abschnitt, den Verbindungsstegen (105) und dem unteren Abschnitt besteht.

8. Anschlussvorrichtung nach einem der Ansprüche 1 bis 7,
**dadurch gekennzeichnet, dass** die äußere Umfangsdichtung (182) und die innere Umfangsdichtung (184) einstückig miteinander verbunden sind.

9. Anschlussvorrichtung nach einem der Ansprüche 1 bis 8,
**dadurch gekennzeichnet, dass** das Ringteil (171) des Löseelementes (170) eine zur einzusteckenden Rohrleitung (2) hin geöffneten Umfangsspalt (122) aufweist, in welchen die Umfangsdichtung (184) angeordnet ist.

10. Anschlussvorrichtung nach einem der Ansprüche 6 bis 9,
**dadurch gekennzeichnet, dass** das Ringteil (171) über seinen Innenumfang zur Aufnahmeöffnung hin offene, partiell verteilte Kerben (124) aufweist, welche an der in Einsteckrichtung (Y) gesehen vordersten Oberfläche des Ringteils (171) des Löseelementes (170, 170a, 170b) beginnen und zwischen dem oberen Abschnitt des Ringteils (171) und dem unteren Abschnitt des Ringteils (171) enden, wobei die Umfangsdichtung (184) die Kerben (124) ausfüllt.

11. Anschlussvorrichtung nach einem der Ansprüche 1 bis 10,
**dadurch gekennzeichnet, dass** in Einsteckrichtung (Y) betrachtet hinter der Umfangsdichtung (182) am Außenumfang des Ringteils (171) mindestens zwei, insbesondere vier, Ansätze (126) angeordnet sind, welche aus demselben Werkstoff bestehen wie die Umfangsdichtungen (182, 184) und einstückig mit der Umfangsdichtung (182) verbunden sind, wobei die Ansätze (126) über den kreisförmigen Umfang des Ringteils (171) gleichmäßig, mit einem gleichen Umfangsabstand zueinander, angeordnet sind, wobei im montierten Zustand die vom Ringteil (171) abweisende Oberfläche der Ansätze (126) zumindest teilweise radial gegen eine sich konisch verengende Oberfläche (171b) des Anschlusskörpers (106) gepresst wird und eine Rückstellkraft entgegen der Einsteckrichtung (Y) bewirkt.

12. Anschlussvorrichtung nach Anspruch 11,
**dadurch gekennzeichnet, dass** das Ringteil (171) einen oder mehrere Anker (128) aufweist, die in Einsteckrichtung (Y) betrachtet auf der axialen Höhe der Ansätze (126) angeordnet sind und sich jeweils radial in einen Ansatz (126) erstrecken, wobei der Anker (128) von dem jeweiligen Ansatz (126) vollständig umschlossen ist.

13. Anschlussvorrichtung nach Anspruch 11 oder 12,
**dadurch gekennzeichnet, dass** an mindestens zwei Ansätzen (126) sich axial in Einsteckrichtung (Y) erstreckende Ambosse (130) angeformt sind, wobei die Ambosse (130) eine in Einsteckrichtung (Y) gerichtete Stirnseite (130a) aufweisen, welche im montierten Zustand gegen eine, gegen die Einsteckrichtung (Y) gerichtete Stirnwand (132a) eines Lagerelements (132) gepresst wird, wobei die Ambosse (130) eine zur konisch verengenden Oberfläche (171b) des Anschlusskörpers (106) gerichtete Umfangsfläche (134) aufweisen, welche eine konkav geformte Oberfläche aufweist, und sich die Ambosse (130) in Einsteckrichtung (Y) zunehmend im Umfang verbreitern.

14. Anschlussvorrichtung nach Anspruch 13,
**dadurch gekennzeichnet, dass** in dem Ringteil (171), in Einsteckrichtung (Y) gesehen, jeweils zwischen Ansatz (126) und Anker (128) oberhalb der Ambosse (130) Nuten (136) eingekerbt sind, welche von der äußeren Umfangsdichtung (182) ausgefüllt sind.

15. Anschlussvorrichtung nach Anspruch 13 oder 14,
**dadurch gekennzeichnet, dass** in dem Ringteil (171) oberhalb der Ambosse (130) Ansatznuten (138) eingekerbt sind, welche von der äußeren Umfangsdichtung (182) ausgefüllt sind.

16. Anschlussvorrichtung nach einem der Ansprüche 2 bis 15,
**dadurch gekennzeichnet, dass** das Ringteil (171) des Löseteils (170, 170a, 170b) in der Betätigungsoberfläche (104) mindestens einen Durchbruch (140) aufweist, der in den Dichtbereich (182d) führt, wobei der Durchbruch (140) von der äußeren Umfangsdichtung (182) ausgefüllt ist.

17. Anschlussvorrichtung nach Anspruch 16,
**dadurch gekennzeichnet, dass** die Durchbrüche (140) derart ausgerichtet sind, dass sie in den Dichtbereich (182d) oberhalb eines Ansatzes (126) gemäß einem der Ansprüche 11 bis 16 führen.

18. Anschlussvorrichtung nach einem der Ansprüche 1 bis 17,
**dadurch gekennzeichnet, dass** die äußere Umfangsdichtung (182) des Löseelements (170a) eine oder mehrere angeformte partielle Verdickungen (186) aufweist, die sich gegen die Einsteckrichtung (Y) erstrecken und mittels angeformter Abstützrippen (188) am Ringteil (171) abgestützt werden.

19. Anschlussvorrichtung nach einem der Ansprüche 1 bis 18,
**dadurch gekennzeichnet, dass** die äußere Umfangsdichtung (182) des Löseelements (170b) eine oder mehrere angeformte partielle Wülste (190) aufweist, die sich gegen die Einsteckrichtung (Y) bis zum Ringteil (171) erstrecken und an dem Ringteil (171) anliegen oder mit dem Ringteil (171) verbunden sind

## Claims

1. Connecting device (1) for pipelines (2) with a connecting body (106) with a receiving opening for a pipeline (2) with a line end (2a) to be inserted in an insertion direction (Y) and a retaining element (5) seated inside the receiving opening for securing of the inserted line end (2a) against its withdrawal, wherein inside of the connecting body (106) there is a sleeve-shaped release element (170, 170a, 170b) seated in an axially displaceable manner such that due to an action on the retaining element (5), the securing of the inserted pipeline (2) is terminated, wherein the release element (170, 170a, 170b) consists of a perimeter-sealed ring part (171) on which snap-in arms (176) separated from each other by longitudinal slots are formed, wherein the ring part (171) can be sealed at its outer perimeter by a perimeter gasket (182) against an interior perimeter wall (171a) of the connecting body (106) and can be sealed at its interior perimeter in the region of its ring opening by a perimeter gasket (184) against the inserted pipeline (2),
**characterized in that** in the assembled state of the connecting device (1), in the interior perimeter region of the ring part (171) of the release element (170, 170a, 170b), the outer perimeter gasket (182) can be deformed from its sealing position such that between the outer perimeter gasket (182) and the opposing, interior perimeter wall (171a) of the connecting body (106), at least one leakage gap is formed in the interior of the connecting device (1) by an interior pressure of the pressurized medium flowing in the pipeline (2), and the release element (170, 170a, 170b) is a materially bonded two-component part composed of the ring part (171) and the perimeter gaskets (182, 184), wherein the perimeter gaskets (182, 184) consist of a more elastic material than the ring part (171).

2. Connecting device according to claim 1,
**characterized in that** the ring part (171) of the release element (170, 170a, 170b) includes an outer actuation surface (104) directed opposite to the insertion direction (Y), and in the assembled state its outer perimeter surface (104a) rests against the perimeter of the interior perimeter wall (171a) of the connecting body (106), such that the release element (170, 170a, 170b), when viewed in the insertion direction (Y) includes a sealing region (182d) behind the outer perimeter surface (104a) extending axially in the insertion direction (Y) and having a reduced diameter of the sealing region (182d), wherein the outer perimeter gasket (182) is disposed.

3. Connecting device according to claim 1 or 2,
**characterized in that** the outer perimeter gasket (182) consists of a ringshaped sealing body, and when viewed in the insertion direction (Y) includes a radially outward pointing sealing lip (112), wherein the outside diameter of the sealing lip (112) is preferably greater than the inside diameter of the connecting body (106) in the region of its interior perimeter wall (171a).

4. Connecting device according to claim 3,
**characterized in that** the ring part (171) when viewed in the insertion direction (Y), includes a rib (114) at the axial height of the sealing lip and this rib (114) extends radially into the sealing lip (112).

5. Connecting device according to one of claims 1 to 4,
**characterized in that** the interior perimeter gasket (184) includes a ringshaped sealing body which features a rounded sealing surface (116) toward the ring opening, wherein the smallest diameter of the sealing surface (116) is preferably smaller than the outside diameter of the pipeline (2) to be inserted.

6. Connecting device according to one of claims 2 to 5,
**characterized in that** the release element (170, 170a, 170b) includes two axial component sections, one upper section which includes the actuating surface (104) and one lower section on which the snap-in arms (176) in particular are formed, wherein the component sections are connected together by connecting bridges (105) and the interior perimeter gasket (184) is connected both to the upper, and also to the lower section.

7. Connecting device according to claim 6,
**characterized in that** the ring part (171) is a single part consisting of the upper section, the connecting bridges (105) and the lower section.

8. Connecting device according to one of claims 1 to 7,
**characterized in that** the outer perimeter gasket (182) and the interior perimeter gasket (184) are connected together as a single piece.

9. Connecting device according to one of claims 1 to 8,
**characterized in that** the ring part (171) of the release element (170) features a perimeter gap (122) open toward the pipeline (2) being inserted and the perimeter gasket (184) is disposed in this perimeter gap (122).

10. Connecting device according to one of claims 6 to 9,
**characterized in that** the ring part (171) features along its interior perimeter toward the receiving opening, open, partially distributed notches (124), which begin at the foremost surface of the ring part (171) of the release element (170, 170a, 170b) -- when viewed in the insertion direction (Y) -- and end between the upper section of the ring part (171) and the lower section of the ring part (171), wherein the perimeter gasket (184) fills the notches (124).

11. Connecting device according to one of claims 1 to 10,
**characterized in that** when viewed in the insertion direction (Y), behind the perimeter gasket (182) at the outer perimeter of the ring part (171) there are at least two, in particular four, lugs (126) which consist of the same material as the perimeter gaskets (182, 184) and are connected as a single piece to the perimeter gasket (182), wherein the lugs (126) are arranged uniformly along the circular perimeter of the ring part (171) at a uniform perimeter spacing to each other, wherein in the assembled state, the surface of the lugs (126) facing away from the ring part (171) is pressed at least in part radially against a conically tapered surface (171b) of the connecting body (106) and causes a restoring force acting opposite to the insertion direction (Y).

12. Connecting device according to claim 11,
**characterized in that** the ring part (171) features one or a plurality of anchors (128) which -- when viewed in the insertion direction (Y) -- are arranged at the axial height of the lugs (126) and each extend radially into a lug (126), wherein the anchor (128) is fully enclosed by the particular lug (126).

13. Connecting device according to claim 11 or 12,
**characterized in that** anvils (130) extending axially in the insertion direction (Y) are molded onto at least two lugs (126), wherein the anvils (130) feature a front side (130a) directed in the insertion direction (Y), which in the assembled state are pressed against a front wall (132a) of a bearing element (132) directed opposite the insertion direction (Y), wherein the anvils (130) feature a perimeter surface (134) directed toward the conically tapered surface (171b) of the connecting body (106), this perimeter surface features a concave shaped surface and the perimeter of the anvils (130) broadens out increasingly in the insertion direction (Y).

14. Connecting device according to claim 13,
**characterized in that,** when viewed in the insertion direction (Y), grooves (136) are notched in the ring part (171), each between the lug (126) and anchor (128) above the anvils (130); these grooves are filled by the outer perimeter gasket (182).

15. Connecting device according to claim 13 or 14,
**characterized in that** in the ring part (171) above the anvils (130), lug grooves (138) are notched which are filled by the outer perimeter gasket (182).

16. Connecting device according to one of claims 2 to 15,
**characterized in that** the ring part (171) of the release part (170, 170a, 170b) includes at least one opening (140) in the actuation surface (104), which leads into the sealing region (182d), wherein the opening (140) is filled by the outer perimeter gasket (182).

17. Connecting device according to claim 16,
**characterized in that** the openings (140) are aligned such that they lead into the sealing region (182d) above a lug (126) according to one of claims 11 to 16.

18. Connecting device according to one of claims 1 to 17,
**characterized in that** the outer perimeter gasket (182) of the release element (170a) includes one or a plurality of molded on, partial thickenings (186), which extend opposite to the insertion direction (Y) and are braced against the ring part (171) by overmolded brace ribs (188).

19. Connecting device according to one of claims 1 to 18,
**characterized in that** the outer perimeter gasket (182) of the release element (170b) includes one or a plurality of overmolded, partial bulges (190), which extend opposite to the insertion direction (Y) out to the ring part (171) and rest against the ring part (171) or are connected to the ring part (171).

## Revendications

1. Dispositif de raccordement (1) pour canalisations (2), comprenant un corps de raccordement (106) comprenant une ouverture de réception pour une canalisation (2) à insérer par une extrémité de canalisation (2a) dans une direction d'insertion (Y) et un élément de retenue (5) logé à l'intérieur de l'ouverture de réception pour fixer l'extrémité de canalisation insérée (2a) contre l'extraction, un élément de dégagement (170, 170a, 170b) en forme de manchon étant logé à l'intérieur du corps de raccordement (106) de manière à pouvoir se déplacer axialement de telle sorte que la fixation de la canalisation insérée (2) peut être supprimée par action sur l'élément de retenue (5), l'élément de dégagement (170, 170a, 170b) étant constitué d'une partie annulaire (171) fermée sur sa périphérie, sur laquelle sont formés des bras d'encliquetage (176) séparés les uns des autres par des fentes longitudinales, la partie annulaire (171) pouvant être étanchéifiée au niveau de sa périphérie extérieure au moyen d'un joint d'étanchéité périphérique (182) contre une paroi périphérique intérieure (171a) du corps de raccordement (106) et au niveau de sa périphérie intérieure dans la zone de son ouverture annulaire au moyen d'un joint d'étanchéité périphérique (184) contre la canalisation insérée (2),
**caractérisé en ce qu'à** l'état monté du dispositif de raccordement (1), dans la zone périphérique intérieure de la partie annulaire (171) de l'élément de dégagement (170, 170a, 170b), le joint d'étanchéité périphérique extérieur (182) peut être déformé à partir de sa position d'étanchéité de telle sorte qu'entre le joint d'étanchéité périphérique extérieur (182) et la paroi périphérique intérieure opposée (171a) du corps de raccordement (106), au moins une fente de fuite est formée par une pression interne du fluide sous pression circulant dans la canalisation (2), présente à l'intérieur du dispositif de raccordement (1), et l'élément de dégagement (170, 170a, 170b) est une partie à deux composants à accouplement de matière composée de la partie annulaire (171) et des joints d'étanchéité périphériques (182, 184), les joints d'étanchéité périphériques (182, 184) étant constitués d'un matériau plus élastique que la partie annulaire (171) .

2. Dispositif de raccordement selon la revendication 1, **caractérisé en ce que** la partie annulaire (171) de l'élément de dégagement (170, 170a, 170b) présente une surface d'actionnement extérieure (104) dirigée à l'encontre de la direction d'insertion (Y) et, à l'état monté, s'appuie sur la circonférence par une surface périphérique extérieure (104a) sur la paroi périphérique intérieure (171a) du corps de raccordement (106), moyennant quoi l'élément de dégagement (170, 170a, 170b) présente, tel que vu dans la direction d'insertion (Y), derrière la surface périphérique extérieure (104a) une zone d'étanchéité (182d) s'étendant axialement dans la direction d'insertion (Y) et de diamètre réduit, dans laquelle est agencé le joint d'étanchéité périphérique extérieur (182).

3. Dispositif de raccordement selon la revendication 1 ou 2, **caractérisé en ce que** le joint d'étanchéité périphérique extérieur (182) est constitué d'un corps d'étanchéité annulaire qui, tel que considéré dans la direction d'insertion (Y), présente une lèvre d'étanchéité (112) qui s'écarte radialement vers l'extérieur, le diamètre extérieur de la lèvre d'étanchéité (112) étant de préférence plus grand que le diamètre intérieur du corps de raccordement (106) dans la zone de sa paroi périphérique intérieure (171a) .

4. Dispositif de raccordement selon la revendication 3, **caractérisé en ce que** la partie annulaire (171), telle que considérée dans la direction d'insertion (Y), présente sur la hauteur axiale de la lèvre d'étanchéité une nervure (114) qui s'étend radialement dans la lèvre d'étanchéité (112) sur la circonférence.

5. Dispositif de raccordement selon l'une quelconque des revendications 1 à 4, **caractérisé en ce que** le joint d'étanchéité périphérique intérieur (184) présente un corps d'étanchéité annulaire, qui présente une surface d'étanchéité (116) arrondie vers l'ouverture annulaire, le plus petit diamètre de la surface d'étanchéité (116) étant de préférence plus petit que le diamètre extérieur de la canalisation (2) à insérer.

6. Dispositif de raccordement selon l'une quelconque des revendications 2 à 5, **caractérisé en ce que** l'élément de dégagement (170, 170a, 170b) présente axialement deux sections de composant, une section supérieure qui présente la surface d'actionnement (104) et une section inférieure sur laquelle sont formés notamment les bras d'encliquetage (176), les sections de composant étant reliées entre elles au moyen d'entretoises de liaison (105) et le joint d'étanchéité périphérique intérieur (184) étant relié à la fois à la section supérieure et à la section inférieure.

7. Dispositif de raccordement selon la revendication 6, **caractérisé en ce que** la partie annulaire (171) est constituée d'un seul tenant de la section supérieure, des entretoises de liaison (105) et de la section inférieure.

8. Dispositif de raccordement selon l'une quelconque des revendications 1 à 7, **caractérisé en ce que** le joint d'étanchéité périphérique extérieur (182) et le joint d'étanchéité périphérique intérieur (184) sont reliés entre eux d'un seul tenant.

9. Dispositif de raccordement selon l'une quelconque des revendications 1 à 8, **caractérisé en ce que** la partie annulaire (171) de l'élément de dégagement (170) présente une fente périphérique (122) ouverte vers la canalisation (2) à insérer, dans laquelle est agencé le joint d'étanchéité périphérique (184).

10. Dispositif de raccordement selon l'une quelconque des revendications 6 à 9, **caractérisé en ce que** la partie annulaire (171) présente des entailles (124) partiellement réparties sur sa périphérie intérieure, ouvertes vers l'ouverture de réception, qui commencent au niveau de la surface la plus en avant de la partie annulaire (171) de l'élément de dégagement (170, 170a, 170b), tel que vu dans la direction d'insertion (Y), et se terminent entre la section supérieure de la partie annulaire (171) et la section inférieure de la partie annulaire (171), le joint d'étanchéité périphérique (184) remplissant les entailles (124).

11. Dispositif de raccordement selon l'une quelconque des revendications 1 à 10, **caractérisé en ce que,** tel que considéré dans la direction d'insertion (Y), au moins deux, notamment quatre, saillies (126) sont agencées derrière le joint d'étanchéité périphérique (182) sur la périphérie extérieure de la partie annulaire (171), lesquelles sont constituées du même matériau que les joints d'étanchéité périphériques (182, 184) et sont reliées d'un seul tenant au joint d'étanchéité périphérique (182), les saillies (126) étant agencées de manière uniforme sur la périphérie circulaire de la partie annulaire (171), avec une distance périphérique identique les unes par rapport aux autres, la surface des saillies (126) qui s'écarte de la partie annulaire (171) étant, à l'état monté, au moins partiellement pressée radialement contre une surface (171b) du corps de raccordement (106) qui se rétrécit coniquement et provoquant une force de rappel à l'encontre de la direction d'insertion (Y).

12. Dispositif de raccordement selon la revendication 11, **caractérisé en ce que** la partie annulaire (171) présente un ou plusieurs ancrages (128) qui, tels que considérés dans la direction d'insertion (Y), sont agencés à la hauteur axiale des saillies (126) et s'étendent chacun radialement dans une saillie (126), l'ancrage (128) étant entièrement entouré par la saillie (126) respective.

13. Dispositif de raccordement selon la revendication 11 ou 12, **caractérisé en ce que** des enclumes (130) s'étendant axialement dans la direction d'insertion (Y) sont formées sur au moins deux saillies (126), les enclumes (130) présentant un côté frontal (130a) dirigé dans la direction d'insertion (Y) qui, à l'état monté, est pressé contre une paroi frontale (132a) d'un élément de palier (132), dirigée à l'encontre de la direction d'insertion (Y), les enclumes (130) présentant une surface périphérique (134) dirigée vers la surface (171b) du corps de raccordement (106) qui se rétrécit coniquement, laquelle présente une surface de forme concave, et les enclumes (130) s'élargissant progressivement en périphérie dans la direction d'insertion (Y).

14. Dispositif de raccordement selon la revendication 13, **caractérisé en ce que** dans la partie annulaire (171), tel que vu dans la direction d'insertion (Y), des rainures (136) sont entaillées respectivement entre la saillie (126) et l'ancrage (128) au-dessus des enclumes (130), lesquelles sont remplies par le joint d'étanchéité périphérique extérieur (182).

15. Dispositif de raccordement selon la revendication 13 ou 14, **caractérisé en ce que** dans la partie annulaire (171), des rainures de saillie (138) sont entaillées au-dessus des enclumes (130), lesquelles sont remplies par le joint d'étanchéité périphérique extérieur (182).

16. Dispositif de raccordement selon l'une quelconque des revendications 2 à 15, **caractérisé en ce que** la partie annulaire (171) de la partie de dégagement (170, 170a, 170b) présente dans la surface d'actionnement (104) au moins une percée (140) qui conduit dans la zone d'étanchéité (182d), la percée (140) étant remplie par le joint d'étanchéité périphérique extérieur (182).

17. Dispositif de raccordement selon la revendication 16, **caractérisé en ce que** les percées (140) sont dirigées de telle sorte qu'elles conduisent dans la zone d'étanchéité (182d) au-dessus d'une saillie (126) selon l'une quelconque des revendications 11 à 16.

18. Dispositif de raccordement selon l'une quelconque des revendications 1 à 17, **caractérisé en ce que** le joint d'étanchéité périphérique extérieur (182) de l'élément de dégagement (170a) présente une ou plusieurs surépaisseurs partielles (186) formées sur celui-ci, qui s'étendent à l'encontre de la direction d'insertion (Y) et qui sont supportées sur la partie annulaire (171) au moyen de nervures de support (188) formées sur celle-ci.

19. Dispositif de raccordement selon l'une quelconque des revendications 1 à 18, **caractérisé en ce que** le joint d'étanchéité périphérique extérieur (182) de l'élément de dégagement (170b) présente un ou plusieurs bourrelets partiels (190) formés sur celui-ci, qui s'étendent jusqu'à la partie annulaire (171) à l'encontre de la direction d'insertion (Y) et qui s'appuient sur la partie annulaire (171) ou sont reliés à la partie annulaire (171).
